(19) Europäisches Patentamt
European Patent Office
Office européen des brevets

(11) **EP 1 421 335 B1**

(12) **EUROPÄISCHE PATENTSCHRIFT**

(45) Veröffentlichungstag und Bekanntmachung des Hinweises auf die Patenterteilung:
**08.07.2009 Patentblatt 2009/28**

(21) Anmeldenummer: **02754542.5**

(22) Anmeldetag: **16.08.2002**

(51) Int Cl.:
***G01D 3/028*** *(2006.01)* ***G01D 5/248*** *(2006.01)*

(86) Internationale Anmeldenummer:
**PCT/DE2002/003035**

(87) Internationale Veröffentlichungsnummer:
**WO 2003/016828 (27.02.2003 Gazette 2003/09)**

(54) **VERFAHREN ZUR KORREKTUR EINER OSZILLATORFREQUENZ**

METHOD FOR CORRECTING AN OSCILLATOR FREQUENCY

PROCEDE POUR CORRIGER UNE FREQUENCE D'OSCILLATEUR

(84) Benannte Vertragsstaaten:
**DE FR**

(30) Priorität: **18.08.2001 DE 10140618**

(43) Veröffentlichungstag der Anmeldung:
**26.05.2004 Patentblatt 2004/22**

(73) Patentinhaber: **ROBERT BOSCH GMBH**
**70442 Stuttgart (DE)**

(72) Erfinder:
• **BRUECKNER, Joerg**
**71069 Sindelfingen (DE)**
• **STROHRMANN, Manfred**
**76137 Karlsruhe (DE)**
• **LOISTL, Hans**
**74389 Cleebronn (DE)**
• **HAAG, Axel-Werner**
**70563 Stuttgart (DE)**

(56) Entgegenhaltungen:
**EP-A- 0 288 601          US-A- 4 616 173**
**US-A- 5 402 394**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 421 335 B1

## Beschreibung

Die vorliegende Erfindung betrifft ein Verfahren und eine Vorrichtung zur Korrektur von Oszillatorfrequenzen nach den Oberbegriffen der Patentansprüche 1 bzw. 8.

Obwohl prinzipiell auf beliebige Netzwerke anwendbar, werden die vorliegende Erfindung und die ihr zugrundeliegende Problematik anhand von Kraftfahrzeug-Steuergeräten erläutert, welche miteinander beispielsweise über ein CAN-System mit einer seriellen Busstruktur verbunden sind.

Stand der Technik

Die in derartigen Steuergeräten, wie beispielsweise Motorsteuergeräten, Pumpensteuergeräten, Bremsensteuergeräten usw. eingesetzten Prozessoren werden üblicherweise mit einem externen Taktsignal eines Oszillators in Form eines Schwingquarzes versorgt. Die Genauigkeit, mit der dessen Taktfrequenz einstellbar ist, beeinflußt unmittelbar die Rechengenauigkeit des betreffenden Prozessors. Eine Vorrichtung zur Bereitstellung eines Taktsignals für den Prozessor eines Steuergeräts ist beispielsweise in der DE 197 22 114 A1 beschrieben.

Bei der sogenannten Frequenzschnittstellen-Übertragung von Meßwerten von einem Sensor auf ein Steuergerät liegen die Informationen über eine zu übertragende Messgröße in der Periodendauer der übertragenen digitalen Signale. Toleranzuntersuchungen zeigen hierbei, daß die für den als Sender verwendeten Sensor und das als Empfänger eingesetzte Steuergerät wirkenden Oszillatoren bei der Einstellung bzw. Abschätzung der Systemtoleranz zu berücksichtigen sind. Man ist aus diesem Grunde bestrebt, Oszillatoren mit hoher Genauigkeit einzusetzen, was herkömmlicherweise zum Einsatz von Schwingquarzen führt.

Der Einsatz von schwingquarzen ist jedoch mit hohen Kosten verbunden, so daß im Rahmen der vorliegenden Erfindung angestrebt wird, im Zusammenhang mit den obengenannten Anwendungen auf den kostenintensiven Einsatz von Schwingquarzen möglichst zu verzichten.

Vorteile der Erfindung

Dieses Ziel wird erreicht durch ein Verfahren mit den Merkmalen des Patentanspruchs 1, sowie eine Vorrichtung mit den Merkmalen des Patentanspruchs 8.

Erfindungsgemäß ist es nun möglich, den Einsatz von Schwingquarzen auf ein Minimum zu reduzieren. Hierdurch sind die Kosten für die Bereitstellung von Sensoren oder Steuergeräten substantiell reduzierbar, da erfindungsgemäß keine Notwendigkeit besteht, sensorseitig und steuergeräteseitig Schwingquarze vorzusehen, um Ergebnisse ausreichender Genauigkeit zu erzielen.

Vorteilhafte Ausgestaltungen der Erfindung sind Gegenstand der Unteransprüche.

Gemäß einer bevorzugten Ausführungsform der Erfindung wird empfängerseitig als zweites Referenz-Frequenzsignal $f_{ref,\,soll}$ ein Soll-Frequenzsignal, insbesondere unter Verwendung eines Schwingquarzes, generiert. Durch steuergeräteseitige Bereitstellung eines Schwingquarzes ist es möglich, sensorseitig als Oszillatoren sehr einfach aufgebaute und preiswert bereitstellbare RC-Kreise zu verwenden, da eventuelle Ungenauigkeiten bzw. Toleranzen mittels Korrekturrechnung unter Verwendung der Schwingquarzfrequenz optimal abgeglichen werden können. So ist es erfindungsgemäß möglich, ein durch den RC-Kreis bereitgestelltes, toleranzbehaftetes Referenz-Frequenzsignal $f_{ref,\,ist}$ für den Abgleich der Oszillatoren in einfacher Form zu verwenden. Es sei darauf hingewiesen, daß es ebenfalls denkbar ist, sensorseitig einen Schwingquarz zur Verfügung zu stellen, welcher ein Soll-Frequenzsignal generiert, welches dann zum Empfänger übertragen wird und mit einem dortigen Frequenzsignal abgeglichen wird. Hierdurch wäre es möglich, empfängerseitig auf einen Schwingquarz zu verzichten. Es ist ebenfalls möglich, sowohl sensorseitig als auch steuergeräteseitig auf Schwingquarze zu verzichten, wobei auch in diesem Falle gegenüber einer herkömmlichen sensorseitigen und empfängerseitigen Bereitstellung von RC-Schwingkreisen eine höhere Genauigkeit erzielbar ist, da die jeweiligen RC-Schwingkreise zueinander abgeglichen werden können.

Es ist bevorzugt, daß der im Rahmen des erfindungsgemäßen Verfahrens berechnete Korrekturfaktor gemäß einer Gleichung der Form

$$K_{kor} = f_{ref,\,soll} / f_{ref,\,ist}$$

berechnet wird. Ein derartiger Korrekturfaktor ist rechnerisch in sehr einfacher Weise generierbar und führt zu Korrekturen ausreichender Genauigkeit.

Es sei an dieser Stelle darauf hingewiesen, dass es beispielsweise zwei Möglichkeiten gibt, $f_{ref,\,ist}$ an den Empfänger zu übertragen: Zunächst ist es möglich, $f_{ref,\,ist}$ zeitlich mit dem Nutzsignal zu verschachteln, beispielsweise im Power-On-Zustand im Falle einer Ein-Draht-Leitung. Es ist ebenfalls denkbar, dass ein zweites Signal die Information $f_{ref, ist}$ permanent zur Verfügung stellt, beispielsweise bei einer Zwei-Draht-Leitung in Form der Perioden- oder Impulsdauer des zweiten Signals, wenn diese konstant sind.

Zweckmäßigerweise wird das erste Referenz-Frequenzsignal bei einem Power-On-Reset des Senders ausgegeben und auf den Empfänger übertragen. Hierdurch ist gewährleistet, daß im Anschluß an die Bestimmung des Korrekturfaktors auf der Grundlage dieses ersten Referenz-Frequenzsignals und des zweiten Referenz-Frequenzsignals eine ungehinderte Auswertung der tatsächlichen, Informationen tragenden Signale durchgeführt werden kann. Es sei der Vollständigkeit halber darauf hingewiesen, dass nicht zwangsläufig eine Ausgabe von $f_{ref, ist}$ bei einem Power-On-Reset erfolgen muss. Die Ausgabe könnte auch zyklisch vorgenommen werden, wenn beispielsweise eine Veränderung der Oszillatorfrequenz während des momentanen Betriebes, beispielsweise aufgrund des Temperaturgangs, ebenfalls zu korrigieren ist.

Es erweist sich ebenfalls als vorteilhaft, die Ausgabe des ersten Referenz-Frequenzsignals zyklisch, insbesondere in regelmäßigen periodischen Abständen, zu bewerkstelligen. Mit dieser Maßnahme können während des Betriebes des Systems notwendig werdende Korrekturen, beispielsweise aufgrund eines Temperaturgangs, durchgeführt werden.

Gemäß einer bevorzugten Ausführungsform des erfindungsgemäßen Verfahrens bzw. der erfindungsgemäßen Vorrichtung werden die Frequenzsignale bzw. Nutzsignale und die Referenz-Frequenzsignale über eine Ein-Draht-Leitung von dem Sensor auf das Steuergerät übertragen. Mit einer derartigen Maßnahme kann der Hardwareaufwand relativ gering gehalten werden.

Gemäß einer weiteren bevorzugten Ausführungsform des erfindungsgemäßen Verfahrens bzw. der erfindungsgemäßen Vorrichtung werden die Frequenzsignale bzw. Nutzsignale und die Referenz-Frequenzsignale jeweils über unterschiedliche Leitungen einer Zwei-Draht-Leitung von dem Sensor auf das Steuergerät übertragen. Mit dieser Maßnahme ist es möglich, Referenz-Frequenzsignale im Wesentlichen unabhängig von den eigentlichen Nutzsignalen zu übertragen. Diese Vorgehensweise erweist sich insbesondere dann als zweckmäßig, wenn eine periodische Überprüfung bzw. Anpassung der erfindungsgemäß durchzuführenden Korrektur erfolgen soll.

Zeichnung

Die Erfindung wird nachstehend anhand der in der Zeichnung dargestellten Ausführungsformen näher erläutert. Hierbei zeigt

Figur 1    ein schematisches Blockschaltbild zur Darstellung einer bevorzugten Ausführungsform der erfindungsgemäßen Vorrichtung,

Figur 2    ein Flußdiagramm zur Darstellung einer ersten bevorzugten Ausführungsform des erfindungsgemäßen Verfahrens, und

Figur 3    ein Flußdiagramm zur Darstellung einer zweiten bevorzugten Ausführungsform des erfindungsgemäßen Verfahrens.

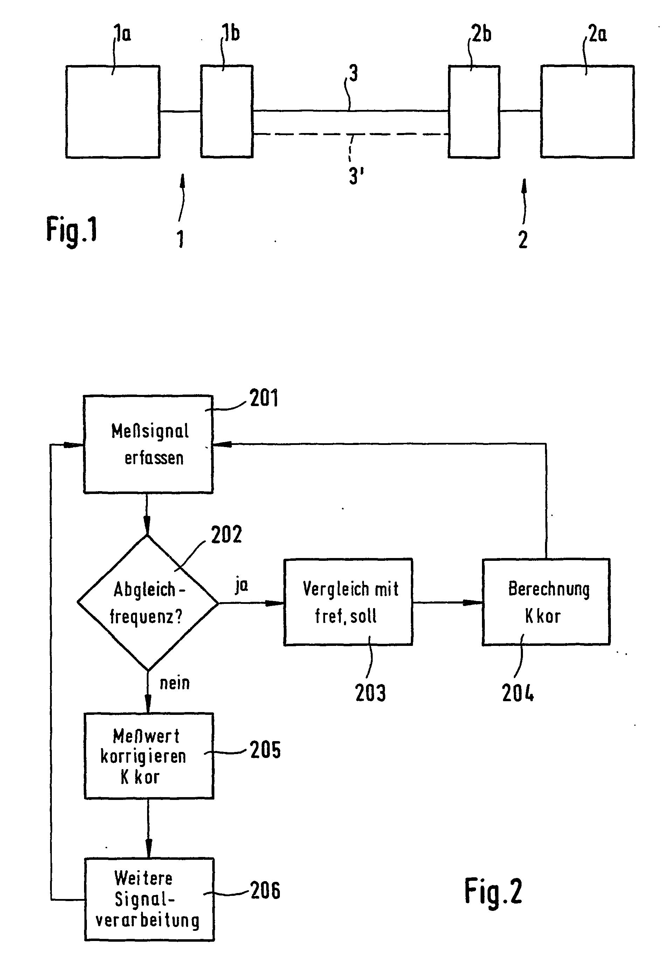

In Figur 1 ist schematisch mit 1 insgesamt ein Sensor, und mit 2 insgesamt ein Steuergerät bezeichnet. Das eigentliche Sensorelement des Sensors 1 ist hierbei mit 1a, und die eigentliche Recheneinrichtung des Steuergeräts 2 mit 2a bezeichnet. Das Sensorelement 1a weist einen (nicht dargestellten) AD-Wandler auf, um Messgrößen in digitale Messsignale umzuwandeln. Zur Übertragung von Meßdaten von dem Sensor 1 auf das Steuergerät 2 ist eine Frequenzschnittstelle vorgesehen, bei der die Information über einen zu übertragenden Meßwert in der Periodendauer des zu übertragenden digitalen Signals liegt. Die Übertragung von Messdaten erfolgt über Leitung 3, welche verdrahtet oder drahtlos ausgebildet sein kann

Die Schnittstelle weist sensorseitig einen Sender 1b, und steuergeräteseitig einen Empfänger 2b auf. Der Sensor 1 und das Steuergerät 2 sind jeweils mit einer (nicht dargestellten) Oszillatoreinrichtung ausgebildet. Im dargestellten Ausführungsbeispiel sei davon ausgegangen, daß sensorseitig als Oszillatoreinrichtung eine RC-Schaltung, und steuergeräteseitig ein Schwingquarz als Oszillatoreinrichtung vorgesehen ist.

Zur Kompensation von Toleranzen, welche bei dem sensorseitigen Oszillator auftreten können, ist der Sender 1b in der Lage, bei einem Power-On-Reset für eine definierte Zeit ein Referenz-Frequenzsignal $f_{ref, ist}$ auszugeben. Ein derartiges Signal wird beispielsweise aufgrund von Drifteinflüssen des Oszillators über dessen Lebensdauer schwanken.

Dieses Referenz-Frequenzsignal $f_{ref, ist}$ wird empfängerseitig durch den Empfänger 2b empfangen und in der Recheneinrichtung 2a mit einem Sollwert $f_{ref, soll}$ verglichen. Durch die Verwendung eines Schwingquarzes als Oszillatoreinrichtung in der Recheneinrichtung 2a weist der Frequenz-Sollwert $f_{ref, soll}$ sehr geringe Toleranzen auf. Durch Quotientenbildung dieser beiden Signale wird gemäß der folgenden Gleichung ein Korrekturfaktor ermittelt:

$$K_{kor} = f_{ref,soll} / f_{ref},$$

ist.

Im Anschluß an die Übertragung des Frequenz-Referenzsignals $f_{ref,ist}$ übertragene, tatsächliche Messgrößen des Sensors 1a darstellende Frequenzen $f_{ist}$ können nun mittels des ermittelten Korrekturfaktors korrigiert werden. Beispielsweise ist es möglich, eine korrigierte Frequenz $f_{kor}$ gemäß einer Gleichung der Form

$$f_{kor} = f_{ist} * K_{kor}$$

zu berechnen.

Da sowohl das Referenz-Frequenzsignal $f_{ref,ist}$ als auch der Frequenzwert $f_{ist}$ eines tatsächlichen Sensorsignals proportional zur internen Oszillatorfrequenz des Sensors bzw. Senders sind, wird durch diese Art der Auswertung bzw. Kompensation eine Oszillatordrift über dessen Lebensdauer kompensiert.

Diese Aussage gilt insbesondere für den Fall, dass einmalige Korrekturwerte ermittelt werden, beispielsweise dann, wenn $f_{ref,ist}$ nur bei einem Power-On-Reset übertragen wird. Für den Fall, dass $f_{ref,ist}$ zyklisch bzw. regelmäßig übertragen wird, erweist es sich als zweckmäßig, auch Effekte wie beispielsweise einen Temperaturgang zu kompensieren.

Bei einer Verwertung des Signals $f_{kor}$ bei der weiteren Signalverarbeitung ist eine wesentlich genauere Auswertung von Messgrößen des Sensors 1 möglich.

Der Ablauf einer bevorzugten Ausführungsform des erfindungsgemäßen Verfahrens wird nun anhand der Figur 2 weiter erläutert.

In einem Schritt 201 wird zunächst ein Signal des Sensors 1 erfaßt.

In einem Schritt 202 wird festgestellt, ob es sich bei diesem Signal um ein Referenz-Frequenzsignal $f_{ref,ist}$ handelt oder nicht. Dies kann beispielsweise dadurch festgestellt werden, ob ein Power-On-Reset detektiert wird oder nicht. Wird das Signal als Referenz-Frequenz-Signal $f_{ref,ist}$ erkannt, verzweigt das Verfahren zu einem Schritt 203, in dem ein Vergleich mit Frequenz-Sollwert $f_{ref,soll}$ durchgeführt wird. In einem anschließenden Schritt 204 wird beispielsweise durch Quotientenbildung $f_{ref,soll}/f_{ref,ist}$ ein Korrekturfaktor $K_{kor}$ berechnet. Das Verfahren verzweigt anschließend wieder zurück zum Schritt 201. Wird bei der Erfassung eines weiteren Meßsignals (Schritt 201) im Schritt 202 festgestellt, daß es sich hierbei nicht um das Referenzsignal, sondern um ein tatsächliches Meßsignal des Sensors 1 handelt, verzweigt das Verfahren zu einem Schritt 205, in dem dieser Meßwert $f_{ist}$ mit dem in Schritt 204 berechneten Korrekturfaktor $K_{kor}$ zum Erhalt eines korrigierten Frequenzwertes $f_{kor}$ korrigiert wird.

Die weitere Signalverarbeitung erfolgt dann auf der Grundlage des korrigierten Frequenzwertes $f_{kor}$, wie mittels Schritt 206 angedeutet ist. Bei Erhalt eines weiteren Messsignals des Sensors 1 verzweigt das dargestellte Verfahren zurück zu Schritt 201.

Der Vollständigkeit halber sei im folgenden die alternative Möglichkeit zur Übertragung von $f_{ref,ist}$ über eine zweite Leitung im Rahmen einer Zwei-Draht-Leitung erläutert. Es sei im folgenden beispielhaft davon ausgegangen, dass, wie bereits oben erwähnt, die Information $f_{ref,ist}$ in der Periodendauer des zweiten Signals erhalten ist. Wenn nämlich der Sensor eine zweite Datenleitung zur Übertragung eines zweiten Sensorparameters besitzt, dann kann dieses zweite Signal in eine digitale Signalform mit konstanter Periodendauer übertragen werden, beispielsweise in Form eines Tastverhältnisses. Ein derartiges zweites Signal mit konstanter Periode stellt hierbei einen direkten Zusammenhang mit der sensorinternen Oszillatorfrequenz dar. Aus diesem Grunde kann die Periodendauer dieses Signals ebenfalls als $f_{ref,ist}$ genutzt werden. Bei dieser Art von Übertragung von $f_{ref,ist}$ ist das Referenzsignal zu jeder Zeit kontinuierlich vorhanden, so dass die Ermittlung des Wertes $K_{kor}$ jederzeit vorgenommen werden kann.

Die zweite Datenleitung zur Übertragung eines zweiten Sensorparameters ist in Figur 1 gestrichelt dargestellt und mit 3' bezeichnet.

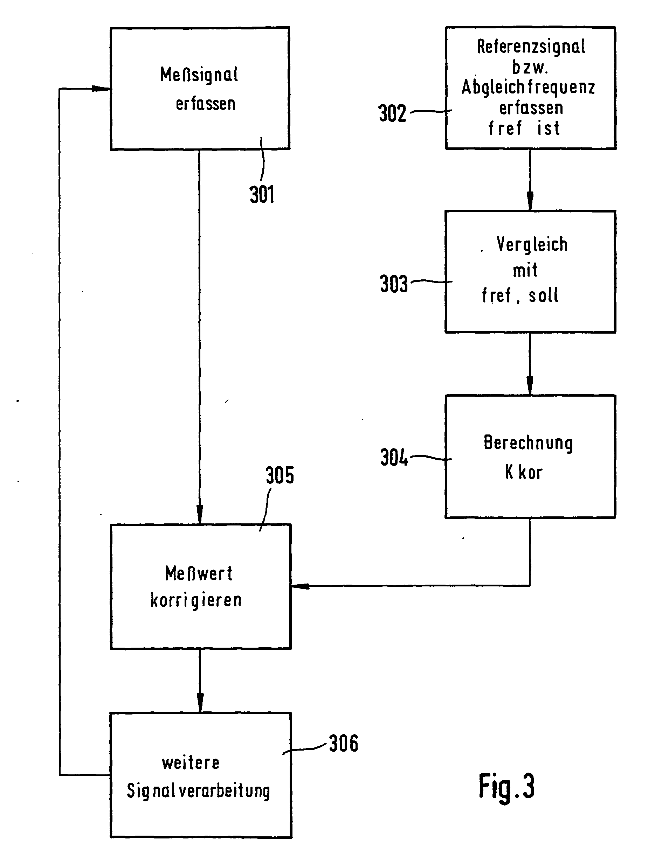

In Figur 3 ist der Ablauf einer bevorzugten Ausführungsform des erfindungsgemäßen Verfahrens, insbesondere unter Verwendung einer Zwei-Draht-Leitung, dargestellt. In einem Schritt 301 wird zunächst ein Signal des Sensors 1 erfasst. Parallel hierzu wird in einem Schritt 302 ein Referenz-Frequenzsignal $f_{ref,ist}$ sensorseitig erfasst. Bei diesem Referenz-Frequenzsignal kann es sich z. B., wie oben erläutert, um ein modifiziertes Signal bezüglich eines zweiten Sensorparameters handeln. Dieses Signal $f_{ref,ist}$ wird in einem anschließenden Schritt 303, insbesondere in der Recheneinrichtung 2a, mit einem Frequenz-Sollwert $f_{ref,soll}$ verglichen. Anhand des in Schritt 303 durchgeführten Vergleiches wird, wiederum beispielsweise durch Quotientenbildung $f_{ref,soll}/f_{ref,ist}$ ein Korrekturfaktor $K_{kor}$ berechnet (Schritt 304).

Das in Schritt 301 erfasste Messsignal des Sensors wird anschließend in einem Schritt 305 mit dem Korrekturfaktor $K_{kor}$ zum Erhalt eines korrigierten Frequenzwertes $f_{kor}$ korrigiert.

Analog zu dem unter Bezugnahme auf Figur 2 beschriebenen Verfahren erfolgt die weitere Signalverarbeitung dann auf der Grundlage des korrigierten Frequenzwertes $f_{kor}$, wie mittels Schritt 306 angedeutet ist. Bei Erhalt eines weiteren Messsignals des Sensors verzweigt das Verfahren zurück zu Schritt 301.

Das zuletzt beschriebene Verfahren erweist sich insbesondere dann als geeignet, wenn eine Zwei-Draht-Leitung zur Verfügung steht, um Mess- bzw. Nutzsignale über eine erste Leitung, und die Information $f_{ref, ist}$ über eine zweite Leitung vom Sensor auf das Steuergerät zu übertragen. Das Verfahren ist insbesondere dann anwendbar, wenn eine zyklische bzw. periodische Ausgabe von $f_{ref, ist}$ beabsichtigt wird. Hierdurch ist es beispielsweise möglich, eine Veränderung der Oszillatorfrequenz des Sensors während des Betriebes, beispielsweise aufgrund eines Temperaturgangs, zu erfassen und zu korrigieren. Der Vollständigkeit halber sei darauf hingewiesen, dass auch bei Verwendung einer Ein-Draht-Leitung zur Übertragung von Messsignalen und Referenzsignalen eine zyklische Übertragung eines Referenzsignals möglich ist. Hierzu wird zweckmäßigerweise das Referenz-Frequenzsignal $f_{ref, ist}$ zeitlich mit dem Nutzsignal verschachtelt.

## Patentansprüche

1. Verfahren zur Korrektur einer Oszillatorfrequenz einer insbesondere digitalen Sender-/Empfänger-/Schnittstelle zur Übertragung von Messsignalen eines Sensors (1) auf ein Steuergerät (2) mit folgenden Schritten:

   - Ausgabe eines ersten Referenz-Frequenzsignals $f_{ref, ist}$ durch den Sensor (1),
   - Empfang des ersten Referenz-Frequenzsignals $f_{ref, ist}$ und Vergleich mit einem zweiten Referenz-Frequenzsignal $f_{ref, soll}$ durch das Steuergerät (2),
   - Berechnung eines Korrekturfaktors $K_{kor}$ auf der Grundlage der ersten und zweiten Referenz-Frequenzsignale und
   - Korrektur von anschließend von dem Sensor gesendeten und durch das Steuergerät empfangenen, tatsächliche Messgrößen darstellenden Frequenzsignalen $f_{ist}$ mittels des berechneten Korrekturfaktors zum Erhalt von korrigierten Frequenzsignalen $f_{kor}$.

2. Verfahren nach Anspruch 1, **dadurch gekennzeichnet, dass** steuergerätseitig bzw. empfängerseitig ein Soll-Frequenzsignal, insbesondere unter Verwendung eines Schwingquarzes, generiert wird.

3. Verfahren nach einem der Ansprüche 1 oder 2, **dadurch gekennzeichnet, daß** der Korrekturfaktor $K_{kor}$ gemäß einer Gleichung der Form

$$K_{kor} = f_{ref,soll} / f_{ref,ist}$$

   berechnet wird.

4. Verfahren nach einem der vorstehenden Ansprüche, **dadurch gekennzeichnet, daß** die Ausgabe des ersten Referenz-Frequenzsignals, insbesondere des Soll-Frequenzsignals, und die Berechnung des Korrekturfaktors $K_{kor}$ während eines Power-On-Reset, insbesondere vor dem Senden von tatsächlichen Meßwerten darstellenden Frequenzsignalen erfolgt.

5. Verfahren nach einem der vorstehenden Ansprüche, **dadurch gekennzeichnet, dass** die Ausgabe des ersten Referenz-Frequenzsignals zyklisch, insbesondere in regelmäßige periodischen Abständen, erfolgt.

6. Verfahren nach einem der vorstehenden Ansprüche, **dadurch gekennzeichnet, dass** die Frequenzsignale $f_{ist}$ und das bzw. die Referenz-Frequenzsignale $f_{ref, ist}$ über eine Ein-Draht-Leitung (3) von dem Sensor (1) auf das Steuergerät (2) übertragen werden.

7. Verfahren nach einem der vorstehenden Ansprüche 1 bis 5, **dadurch gekennzeichnet, dass** die Frequenzsignale $f_{ist}$ und das bzw. die Referenz-Frequenzsignal $f_{ref, ist}$ jeweils über unterschiedliche Leitungen (3, 3') einer Zwei-Draht-Leitung von dem Sensor (1) auf das Steuergerät (2) übertragen werden.

8. Vorrichtung zur Korrektur einer Oszillatorfrequenz einer insbesondere digitalen Sender-/Empfänger-/Schnittstelle zur Übertragung von Messsignalen eines Sensors (1) auf ein Steuergerät (2), **gekennzeichnet durch**

- Mittel (1a, 1b zur Ausgabe eines ersten Referenz-Frequenzsignals und Messsignalen **durch** den Sensor (1),
- Mittel (2a, 2b) zum Empfang des Referenz-Frequenzsignals und Messsignalen und Vergleich des Referenz-Frequenzsignals mit einem zweiten Referenz-Frequenzsignal **durch** das Steuergerät (2),
- Mittel (2a) zur Berechnung eines Korrekturfaktors für die Messsignale auf der Grundlage der Referenz-Frequenzsignale, und
- Mittel (2a) zur Korrektur von weiteren Frequenzsignalen mittels des berechneten Korrekturfaktors.

9. Vorrichtung nach Anspruch 8, **dadurch gekennzeichnet, daß** die Mittel (2a, 2b) zum Empfang des Referenzsignals einen Schwingquarz aufweisen.

10. Vorrichtung nach einem der Ansprüche 8 oder 9, **gekennzeichnet durch** eine Ein-Draht-Leitung zur Übertragung des Referenz-Frequenzsignal $f_{ref, ist}$ und der Messsignale von dem Sensor (1) auf das Steuergerät (2).

11. Vorrichtung nach einem der Ansprüche 8 oder 9, **gekennzeichnet durch** eine Zwei-Draht-Leitung, zur Übertragung eines Referenz-Frequenzsignals $f_{ref, ist}$ über eine erste Leitung, und der Messsignale über eine zweite Leitung der Zwei-Draht-Leitung.

**Claims**

1. Method for correcting an oscillator frequency of a transmitter/receiver interface which is, in particular, digital and is intended to transmit measurement signals from a sensor (1) to a control unit (2), having the following steps:

- a first reference frequency signal $f_{ref, ist}$ is output by means of the sensor (1),
- the first reference frequency signal $f_{ref, ist}$ is received and compared with a second reference frequency signal $f_{ref, soll}$ by means of the control unit (2),
- a correction factor $K_{kor}$ is calculated on the basis of the first and second reference frequency signals, and
- frequency signals $f_{ist}$ which represent actual measurement variables and are then transmitted by the sensor and received by the control unit are corrected using the calculated correction factor in order to obtain corrected frequency signals $f_{kor}$.

2. Method according to Claim 1, **characterized in that** a desired frequency signal is generated on the control unit side or on the receiver side, in particular using a crystal oscillator.

3. Method according to either of Claims 1 and 2, **characterized in that** the correction factor $K_{kor}$ is calculated according to an equation of the form

$$K_{kor} = f_{ref, soll} / f_{ref, ist}.$$

4. Method according to one of the preceding claims, **characterized in that** the first reference frequency signal, in particular the desired frequency signal, is output, and the correction factor $K_{kor}$ is calculated, during a power-on reset, in particular before frequency signals which represent actual measured values are transmitted.

5. Method according to one of the preceding claims, **characterized in that** the first reference frequency signal is output cyclically, in particular at regular periodic intervals.

6. Method according to one of the preceding claims, **characterized in that** the frequency signals $f_{ist}$ and the reference frequency signal (s) $f_{ref, ist}$ are transmitted from the sensor (1) to the control unit (2) via a single-wire line (3).

7. Method according to one of the preceding Claims 1 to 5, **characterized in that** the frequency signals $f_{ist}$ and the reference frequency signal (s) $f_{ref, ist}$ are respectively transmitted from the sensor (1) to the control unit (2) via different lines (3, 3') of a two-wire line.

8. Apparatus for correcting an oscillator frequency of a transmitter/receiver interface which is, in particular, digital and is intended to transmit measurement signals from a sensor (1) to a control unit (2), **characterized by**

   - means (1a, 1b) for outputting a first reference frequency signal and measurement signals by means of the sensor (1),
   - means (2a, 2b) for receiving the reference frequency signal and measurement signals and comparing the reference frequency signal with a second reference frequency signal by means of the control unit (2),
   - means (2a) for calculating a correction factor for the measurement signals on the basis of the reference frequency signals, and
   - means (2a) for correcting further frequency signals using the calculated correction factor.

9. Apparatus according to Claim 8, **characterized in that** the means (2a, 2b) for receiving the reference signal have a crystal oscillator.

10. Apparatus according to either of Claims 8 and 9, **characterized by** a single-wire line for transmitting the reference frequency signal $f_{ref, ist}$ and the measurement signals from the sensor (1) to the control unit (2).

11. Apparatus according to either of Claims 8 and 9, **characterized by** a two-wire line for transmitting a reference frequency signal $f_{ref, ist}$ via a first line and for transmitting the measurement signals via a second line of the two-wire line.

**Revendications**

1. Procédé de correction de la fréquence d'un oscillateur d'une interface d'émetteur/récepteur, notamment numérique, destinée à la transmission de signaux de mesure d'un capteur (1) vers un module de commande (2), comprenant les étapes suivantes :

   - Délivrance d'un premier signal de fréquence de référence $f_{ref, ist}$ par le capteur (1),
   - Réception du premier signal de fréquence de référence $f_{ref, ist}$ et comparaison avec un deuxième signal de fréquence de référence $f_{ref, soll}$ par le module de commande (2),
   - Calcul d'un facteur de correction $K_{kor}$ en se basant sur le premier et le deuxième signal de fréquence de référence et
   - Correction des signaux de fréquence $f_{ist}$ qui sont ensuite envoyés par le capteur et reçus par le module de commande, lesquels représentent les grandeurs réellement mesurées, au moyen du facteur de correction calculé afin d'obtenir des signaux de fréquence corrigés $f_{kor}$.

2. Procédé selon la revendication 1, **caractérisé en ce qu'**un signal de fréquence de consigne est généré du côté du module de commande ou du côté du récepteur, notamment en utilisant un quartz oscillant.

3. Procédé selon l'une des revendications 1 ou 2, **caractérisé en ce que** le facteur de correction $K_{kor}$ est calculé conformément à une équation sous la forme $K_{kor} = f_{ref,soll}/f_{ref,ist}$.

4. Procédé selon l'une des revendications précédentes, **caractérisé en ce que** la délivrance du premier signal de fréquence de référence, notamment du signal de fréquence de consigne, et le calcul du facteur de correction $K_{kor}$ sont effectués pendant une réinitialisation à la mise sous tension, notamment avant d'envoyer les signaux de fréquence qui représentent les valeurs mesurées réelles.

5. Procédé selon l'une des revendications précédentes, **caractérisé en ce que** la délivrance du premier signal de fréquence de référence est effectuée de manière cyclique, notamment à intervalles périodiques réguliers.

6. Procédé selon l'une des revendications précédentes, **caractérisé en ce que** les signaux de fréquence $f_{ist}$ et le ou les signaux de fréquence de référence $f_{ref,ist}$ sont transmis du capteur (1) au module de commande (2) par le biais d'une câble unifilaire (3).

**7.** Procédé selon l'une des revendications 1 à 5 précédentes, **caractérisé en ce que** les signaux de fréquence $f_{ist}$ et le ou les signaux de fréquence de référence $f_{ref, ist}$ sont respectivement transmis du capteur (1) au module de commande (2) sur les différents conducteurs (3, 3') d'un câble bifilaire.

**8.** Dispositif de correction de la fréquence d'un oscillateur d'une interface d'émetteur/récepteur, notamment numérique, destinée à la transmission de signaux de mesure d'un capteur (1) vers un module de commande (2), **caractérisé par** :

- des moyens (1a, 1b) pour délivrer un premier signal de fréquence de référence et des signaux de mesure par le capteur (1),
- des moyens (2a, 2b) pour recevoir le premier signal de fréquence de référence et les signaux de mesure et pour faire comparer le signal de fréquence de référence avec un deuxième signal de fréquence de référence par le module de commande (2),
- des moyens (2a) pour calculer un facteur de correction pour les signaux de mesure en se basant sur les signaux de fréquence de référence et
- des moyens (2a) pour corriger les autres signaux de fréquence au moyen du facteur de correction calculé.

**9.** Dispositif selon la revendication 8, **caractérisé en ce que** les moyens (2a, 2b) de réception du signal de référence présentent un quartz oscillant.

**10.** Dispositif selon l'une des revendications 8 ou 9, **caractérisé par** un câble unifilaire pour la transmission du signal de fréquence de référence $f_{ref, ist}$ et des signaux de mesure du capteur (1) au module de commande (2).

**11.** Dispositif selon l'une des revendications 8 ou 9, **caractérisé par** un câble bifilaire pour la transmission d'un signal de fréquence de référence $f_{ref, ist}$ sur un premier conducteur et des signaux de mesure sur un deuxième conducteur du câble bifilaire.

1a   1b   3   2b   2a

3'

## Fig.1

1

2

201 Meßsignal erfassen

202 Abgleich-frequenz?

ja → 203 Vergleich mit fref,soll → 204 Berechnung K kor

nein

205 Meßwert korrigieren K kor

206 Weitere Signal-verarbeitung

## Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722114 A1